# EUROPÄISCHE PATENTSCHRIFT

(11) **EP 1 637 757 B1**
(45) Veröffentlichungstag und Bekanntmachung des Hinweises auf die Patenterteilung: **05.12.2007**
(21) Anmeldenummer: 04104486.8
(22) Anmeldetag: 16.09.2004
(51) Int. Cl.: F16D 25/12, F16D 13/72, F16H 57/04

(54) **Kupplungsgetriebe und Verfahren zum Schmieren und Kühlen desselben**
Clutch transmission and method of lubricating and cooling the same
Transmission à embrayage et procédé de lubrication et refroidissement lamême

(43) Veröffentlichungstag der Anmeldung: 22.03.2006
(73) Patentinhaber: Getrag Ford Transmissions GmbH, 50725 Köln (DE)
(72) Erfinder: Hegerath, Andreas, 50126 Bergheim (DE)

(56) Entgegenhaltungen:
- EP-A- 0 715 089
- DE-A1- 10 118 756
- US-A- 3 672 478
- US-A- 4 321 990

## Beschreibung

Die Erfindung betrifft ein Kupplungsgetriebe mit einem Getriebeteil, mit einem Kupplungsteil und mit einer hydraulischen, eine Ölpumpe umfassenden Steuerung zur Bereitstellung von Drücken und Volumenströmen in dem Kupplungsgetriebe, wobei der Kupplungsteil in einer Kupplungskammer und der Getriebeteil in einer Getriebekammer untergebracht ist. Des weiteren betrifft die Erfindung ein Verfahren zum Schmieren und Kühlen des Kupplungsgetriebes.

Aus dem Stand der Technik sind Kupplungsgetriebe in Kraftfahrzeugen bekannt, in denen der Kupplungsteil und der Getriebeteil automatisch über die hydraulische Steuerung betätigt werden. Zudem sorgt die hydraulische Steuerung neben der Schmierung des Getriebeteils auch für die Kühlung des Kupplungsteils, indem die Ölpumpe Öl in die Kupplungskammer pumpt. Das für die hydraulische Steuerung benötigte Öl wird dabei aus der Getriebekammer angesaugt und in die Kupplungskammer geleitet, wo das Öl stark mit Luft durchmischt wird. Danach gelangt das mit Luft vermischte Öl wieder in die Getriebekammer.

Um zu verhindern, dass beim Fahren des Kraftfahrzeugs auch unter maximalen Steigungs- und Gefällewinkeln Luft angesaugt wird, muss der Ölstand in der Getriebekammer hoch gewählt werden. Durch den hohen Ölstand ergibt sich jedoch ein niedriger Wirkungsgrad des Getriebeteils, was auf ein Planschen der Zahnräder des Getriebeteils im Öl zurückzuführen ist. Durch das Planschen erhöht sich zudem der Luftanteil im Öl, wodurch die Kompressibilität des Öls weiter ansteigt. Unter der ansteigenden Kompressiblität leidet aber die Steuerbarkeit der Bauteile im Kupplungsgetriebe, die durch die hydraulische Steuerung betätigt werden. Dies kann zu Einbußen an Komfort und Lebensdauer führen.

Aus der US 3 672 478 ist ein Kupplungsgetriebe bekannt, bei dem zusätzlich zur Kupplungskammer und Getriebekammer eine Ansaugkammer vorgesehen ist, aus der eine Ölpumpe Öl ansaugt. Die Ansaugkammer ist dabei über einen Ölausgang mit der Kupplungskammer verbunden, um das aus der Kupplungskammer austretende Öl aufzunehmen. Die Getriebekammer ist dabei nicht in den Ölkreislauf zwischen Kupplungskammer und Ansaugkammer einbezogen, so dass eine Ölbereitstellung (Ausgleich möglicher Ölverluste, Filterung) für die Getriebekammer gesondert vorgehalten werden muss.

Der Erfindung liegt daher die Aufgabe zugrunde, ein Kupplungsgetriebe bereitzustellen, das einfach aufgebaut ist, dessen Getriebeteil einen hohen Wirkungsgrad aufweist und bei dem die zu betätigenden Bauteile gut gesteuert werden können.

Die der Erfindung zugrunde liegende Aufgabe wird dadurch gelöst, dass eine Wirkverbindung zwischen Ansaugkammer und Getriebekammer besteht, um ein Abführen von Öl aus der Ansaugkammer in die Getriebekammer zu ermöglichen, und dass des weiteren eine Wirkverbindung zwischen Kupplungskammer und Getriebekammer besteht, um ein Abführen von Öl aus der Getriebekammer in die Kupplungskammer zu ermöglichen. Dadurch wird das in der Getriebekammer befindliche Öl in den Kreislauf zwischen Kupplungskammer und Ansaugkammer einbezogen. Durch einen hinsichtlich Planschverlusten optimierten Ölstand in der Getriebekammer bei noch ausreichender Ölsumpfschmierung des Getriebeteils lässt sich der Luftanteil in dem Öl, hervorgerufen durch das Planschen der Zahnräder, niedrig halten. Da das Öl aus der Ansaugkammer angesaugt wird, kann nun, unabhängig von dem Ölstand in der Getriebekammer, durch einen entsprechend ausgelegten Ölstand in der Ansaugkammer sichergestellt werden, dass auch unter extremen Neigungswinkeln des Kraftfahrzeugs keine Luft angesaugt wird. Zudem können Ölstand und/oder Ölmenge der Ansaugkammer ohne Rücksicht auf etwaige Planschverluste gezielt optimiert werden, um den Luftanteil des angesaugten Öls zu reduzieren.

Der Begriff "Ö!" so!! hier allgemein für Fluide stehen, die zur Kühlung und zur Schmierung von einem Kupplungsgetriebe verwendet werden können.

Zwischen der Ansaugkammer und der Getriebekammer kann wenigstens ein Öldurchlass vorgesehen sein, der vorzugsweise als Überlauf ausgebildet ist. Somit strömt Öl von der Ansaugkammer nur dann in die Getriebekammer, wenn in der Ansaugkammer ein bestimmter, durch den Überlauf festgelegter Ölstand überschritten wird.

In einem bevorzugten Ausführungsbeispiel entspricht der vertikale Abstand des durch den Überlauf festgelegten Ölstands zu einem unteren Ende der Ansaugkammer wenigstens dem Drittel der Bauhöhe des Kupplungsgetriebes. Damit kann sich zwischen dem Überlauf und einem Bereich am unteren Ende der Ansaugkammer, wo die Ölpumpe das Öl ansaugt, eine ausreichend hohe Ölsäule bilden. In der Ansaugkammer kommt das Öl zur Ruhe, so dass sich die im Öl befindlichen Luftbläschen lösen und nach oben aufsteigen können. Im Ansaugbereich am unteren Ende der Ansaugkammer weist das Öl naturgemäß den niedrigsten Luftanteil auf.

Zwischen der Getriebekammer und der Kupplungskammer kann wenigstens ein Öldurchlass vorgesehen sein, durch den ein Ölaustausch zwischen diesen Kammern möglich ist. Der Öldurchlass ist vorzugsweise als ein Überlauf ausgebildet: Überflüssiges Öl aus der Getriebekammer fließt somit in die Kupplungskammer. Alternativ oder zusätzlich kann der Öldurchlass so ausgebildet sein, dass ein Ölstrom in die andere Richtung, das heißt, von der Kupplungskammer in die Getriebekammer, erschwert oder unmöglich gemacht wird. Beispielsweise könnte der Öldurchlass als ein Rückschlagventil oder dergleichen ausgeführt sein, so dass ein Ölstrom nur von der Getriebekammer in die Kupplungskammer möglich ist. Auch könnten konstruktive Mittel wie Schwall- oder Leitwände/rippen in der Nähe des Öldurchlasses vorgesehen sein, die einen Ölstrom von der Kupplungskammer durch den Öldurchlass in die Getriebekammer behindern.

Vorzugsweise wird Öl von einem Öleingang der Kupplungskammer, durch den das Öl von der Ansaugkammer in die Kupplungskammer tritt und/oder von dem Öldurchiass zwischen Getriebekammer und Kupplungskammer zu dem Ölausgang der Kupplungskammer transportiert. Der Transport erfolgt dabei durch die rotierenden Bauteile des Kupplungsteils. Die rotierenden Bauteile reißen das Öl durch die in Umfangsrichtung wirkende Reibkraft mit und transportieren es unter Berücksichtigung der in radialer Richtung wirkenden Zentrifugalkraft auf spiralförmigem Weg zum Ölausgang der Kupplungskammer. Der Ölausgang ist dabei so ausgelegt, dass er die mitgerissenen Ölteilchen auffängt und in die Ansaugkammer leitet. Der Kupplungsteil hebt somit das Öl auf ein Niveau, dass es vom Ölausgang der Kupplungskammer in die Ansaugkammer gelangt. Ein Teil des Öls steht in der Ansaugkammer für die Steuerung, Kühlung und Schmierung, beispielsweise des Kupplungsteils und/oder anderer zu betätigender Bauteile, bereit. Ein überschüssiger Teil des Öls strömt über den Überlauf in die Getriebekammer und fließt wiederum über einen Überlauf in die Kupplungskammer zurück.

In einem bevorzugten Ausführungsbeispiel ist die hydraulische Steuerung in der Ansaugkammer angeordnet. Eine derartige Anordnung führt zu kurzen Leitungswegen, wenn auch die Ölpumpe mit einem vorzugsweise vorgeschalteten Saugfilter in der Ansaugkammer untergebracht ist.

Zwischen einem Bauteil oder einer Bauteillagerung des Getriebeteils und der Ölpumpe kann eine Verbindung vorgesehen sein. Diese Verbindung sorgt für eine gesonderte Schmierung des Bauteils oder der Bauteillagerung unabhängig von der Ölsumpfschmierung in der Getriebekammer. Alternativ oder zusätzlich kann auch eine Verbindung zwischen dem Ölausgang der Kupplung und dem Bauteil oder der Bauteillagerung bestehen.

Das erfindungsgemäße Verfahren zum Schmieren und Kühlen eines Kupplungsgetriebes, wie es oben in seinen unterschiedlichen Ausführungen beschrieben ist, weist folgende Verfahrenschritte auf: Zunächst wird Öl aus der Ansaugkammer angesaugt und in die Kupplungskammer gepumpt. Der Kupplungsteil transportiert das Öl zu dem Ölausgang der Kupplungskammer. Vom Ölausgang der Kupplungskammer wird das Öl in die Ansaugkammer geleitet. Von da aus wird das Öl wieder in die Kupplungskammer gepumpt, sodass sich ein Kreislauf zwischen Kupplungskammer und Ansaugkammer einstellt. Ein Teilstrom wird von der Ansaugkammer in die Getriebekammer geleitet, von wo aus es in die Kupplungskammer geführt wird. Dadurch entsteht ein weiterer Kreislauf, der die Getriebekammer einbindet.

Das Verfahren kann vorsehen, dass nur bei Überschreiten eines bestimmten Ölstandes in der Ansaugkammer Öl aus der Ansaugkammer in die Getriebekammer abgeführt wird. Auch kann das Verfahren alternativ oder zusätzlich nur ein Abführen von Öl aus der Getriebekammer in die Kupplungskammer zulassen, wenn in der Getriebekammer ein bestimmter Ölstand überschritten wird.

Anhand der in den Figuren dargestellten Ausführungsbeispielen wird die Erfindung näher erläutert. Es zeigen
- Figur 1: ein Flussbild von Volumenströmen zwischen einzelnen Kammern eines Ausführungsbeispiels;
- Figur 2: schematisch ein Kupplungsgetriebe im Querschnitt; und
- Figur 3: das Kupplungsgetriebe der Figur 2 mit einzelnen Bauteilen.

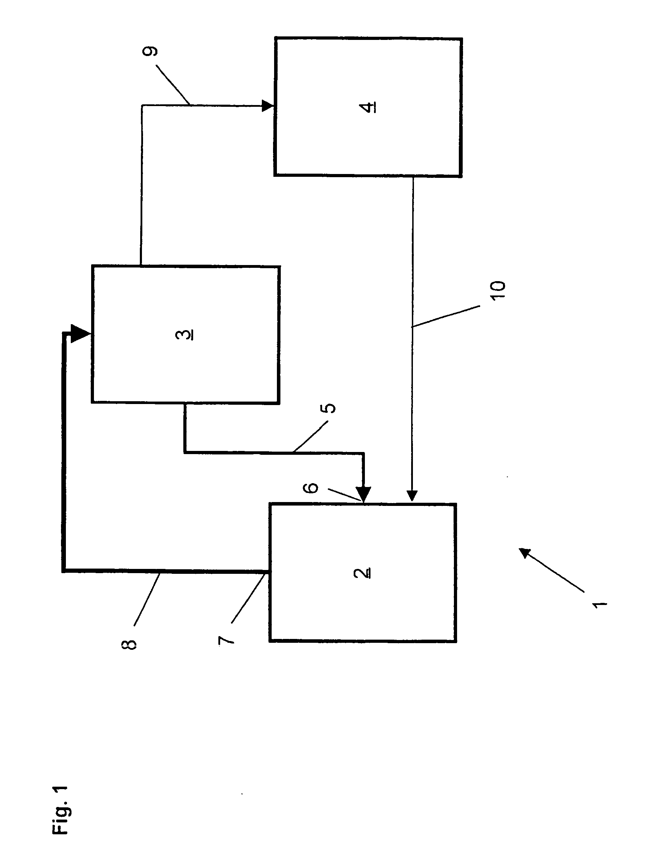

Figur 1 zeigt ein Flussbild mit Volumenströmen innerhalb eines Kupplungsgetriebe, das in seiner Gesamtheit mit 1 bezeichnet wird. Das Kupplungsgetriebe umfasst drei Kammern: eine Kupplungskammer 2, eine Ansaugkammer 3 und eine Getriebekammer 4. Ein Volumenstrom 5 führt aus der Ansaugkammer 3 durch einen Öleingang 6 in die Kupplungskammer 2. In der Kupplungskammer 2 wird das Öl von dem Öleingang 6 der Kupplungskammer 2 zu einem Ölausgang 7 der Kupplungskammer 2 transportiert. Zwischen Ölausgang 7 und der Ansaugkammer 3 ist eine Verbindung gegeben, die einen Volumenstrom 8 zu der Ansaugkammer 3 ermöglicht. Somit besteht ein Kreislauf zwischen Kupplungskammer 2 und Ansaugkammer 3.

Ein Volumenstrom 9 fließt von der Ansaugkammer 3 zur Getriebekammer 4. Von dort aus führt eine Verbindung zu der Kupplungskammer 2, so dass sich ein Volumenstrom 10 aus der Getriebekammer 4 in die Kupplungskammer 2 einstellt. Das aus der Getriebekammer 4 stammende Öl wird innerhalb der Kupplungskammer 2 zum Ölausgang 7 transportiert. Vom Ölausgang 7 gelangt das Öl wieder in die Ansaugkammer 3. Somit besteht ein weiterer Kreislauf, der durch die Volumenströme 8, 9 und 10 sowie den dazwischen liegenden Kammern 3, 4, 2 gekennzeichnet wird. Die unterschiedlich großen Volumenströme 8, 9, 10, 5 werden durch unterschiedliche Strichstärken der zugehörigen Pfeile dargestellt. Der Volumenstrom 8 entspricht dabei der Summe der Volumenströme 5 und 10. Zu erkennen ist auch, dass der Volumenstrom 5 größer ist als der Volumenstrom 10.

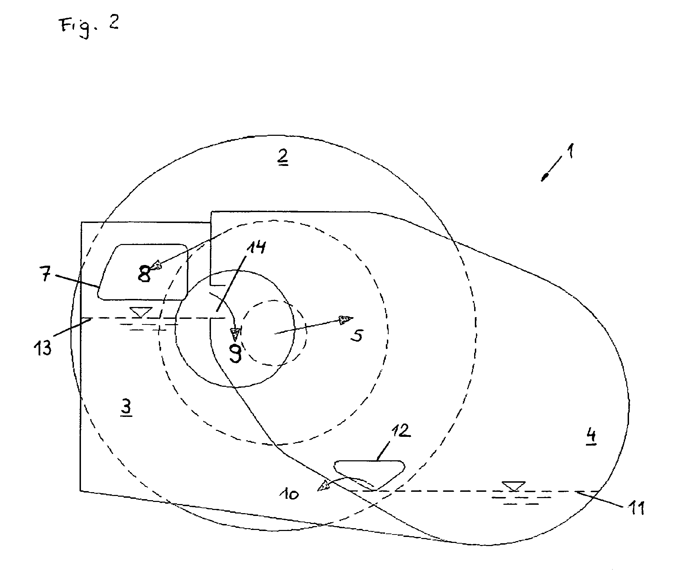

Figur 2 zeigt das Kupplungsgetriebe 1 der Figur im Querschnitt, wobei es sich um eine schematische Darstellung handelt. In der Getriebekammer 4 befindet sich Öl, dessen Menge durch einen Ölstand 11 dargestellt ist. Die Höhe des Ölstands 11 hängt von der Lage einer Durchtrittsöffnung 12 ab. Die Durchtrittsöffnung 12 zwischen Getriebekammer 4 und Kupplungskammer 2 ermöglicht den Volumenstrom 10. Die Durchtrittsöffnung 12 ist als Überlauf ausgebildet. Nur wenn der Ölstand 11 in der Getriebekammer 4 steigt, fließt Öl von der Getriebekammer 4 in die Kupplungskammer 2.

Für die Ansaugkammer 3 ist ein Ölstand 13 eingezeichnet, dessen Höhe durch die Lage eines Öldurchlasses 14 zwischen Ansaugkammer 3 und Getriebekammer 4 vorgegeben wird. Der als Überlauf ausgebildete Öldurchlass 14 ermöglicht einen Volumenstrom 9 von überflüssigem Öl von der Ansaugkammer 3 in die Getriebekammer 4.

Oberhalb des Ölstandes 13 ist der Ölausgang 7 der Kupplungskammer 2 angeordnet, so dass der Volumenstrom 8 aus der Kupplungskammer 2 in die oben offene Ansaugkammer 3 gelangt. Der Volumenstrom 5 zwischen Ansaugkammer und Kupplungskammer ist in Fig. 2 als ein Pfeil eingezeichnet, der von einem inneren Bereich der Kupplungskammer 2 radial nach außen führt. Diese Darstellung des Volumenstroms 5 soll verdeutlichen, dass das im inneren Bereich der Kupplungskammer 2 zugeführte Öl in der Kupplungskammer 2 radial nach außen transportiert wird.

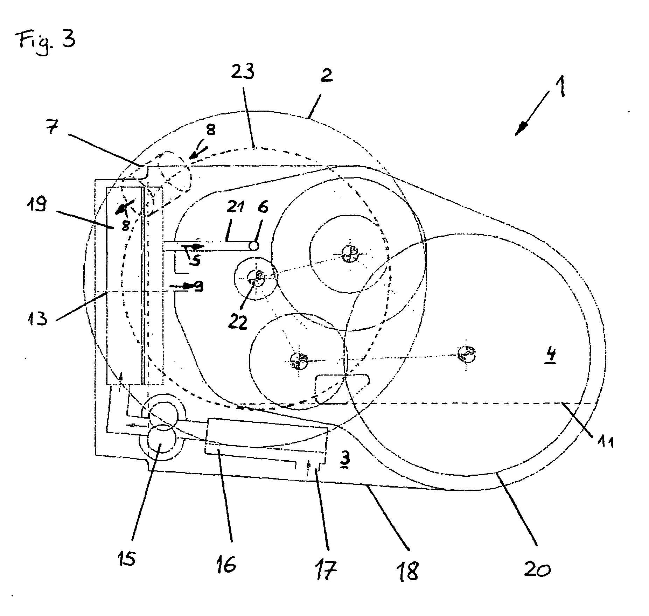

Figur 3 zeigt das Kupplungsgetriebe 1 der Figur 2 mit einer Pumpe 15, der ein Saugfilter 16 vorgeschaltet ist. Eine Öffnung 17 des Saugfilters 16 ist an einem unteren Ende 18 der Ansaugkammer 3 angeordnet.

In der Ansaugkammer 3 ist eine hydraulische Steuerung 19 untergebracht, die für die benötigten Drücke und Volumenströme in dem Kupplungsgetriebe 1 sorgt. Die Getriebekammer 4 nimmt einen Getriebeteil 20 auf, der mehrere nicht weiter bezeichnete Zahnräder und Wellen aufweist.

Von der Ansaugkammer 3 führt eine Leitung 21 in die Nähe einer in die Zeichenebene sich erstreckenden Achse 22, um die sich die rotierenden Bauteile eines Kupplungsteils 23 drehen, das in der Kupplungskammer 2 untergebracht ist. Die Leitung 21, die den Volumenstrom 5 führt, endet an dem Öleingang 6 der Kupplungskammer 2. Die rotierenden Bauteile des Kupplungsteils transportieren das Öl durch Reibungskräfte in Umfangsrichtung und durch Zentrifugalkräfte in radialer Richtung gesehen spiralförmig nach außen, wo es durch den Ölausgang 7 aufgefangen wird. Der Ölausgang 7 ist als zylinderförmige Öffnung dargestellt, deren Mittelachse näherungsweise mit einer Tangente des Kupplungsteils 23 zusammenfällt. Die Richtung der Tangente entspricht dabei in etwa der Richtung der durch die rotierenden Bauteile des Kupplungsteils 23 mitgerissenen Ölteilchen am Ölausgang 7.

### Bezugszeichenliste

- 1: Kupplungsgetriebe
- 2: Kupplungskammer
- 3: Ansaugkammer
- 4: Getriebekammer
- 5: Volumenstrom
- 6: Öleingang
- 7: Ölausgang
- 8: Volumenstrom
- 9: Volumenstrom
- 10: Volumenstrom
- 11: Ölstand
- 12: Öldurchlass
- 13: Ölstand
- 14: Öldurchlass
- 15: Ölpumpe
- 16: Saugfilter
- 17: Öffnung
- 18: Unteres Ende
- 19: Hydraulische Steuerung
- 20: Getriebeteil
- 21: Leitung
- 22: Achse
- 23: Kupplungsteil

## Patentansprüche

1. Kupplungsgetriebe (1) mit einem in einer Getriebekammer (4) untergebrachten Getriebeteil (20), mit einem in einer Kupplungskammer (2) untergebrachten Kupplungsteil (23), mit einer hydraulischen, eine Ölpumpe (15) umfassenden Steuerung (19) zur Bereitstellung von Drücken und Volumenströmen in dem Kupplungsgetriebe(1), wobei zur Steuerung und/oder zur Kühlung des Kupplungsteils (23) die Ölpumpe (15) Öl ansaugt und in die Kupplungskammer (2) pumpt, und mit einer Ansaugkammer (3), aus der die Ölpumpe (15) Öl ansaugt, wobei die Ansaugkammer (3) mit einem Ölausgang (7) der Kupplungskammer (2) in Wirkverbindung steht, um das aus der Kupplungskammer (2) austretende Öl aufzunehmen, **dadurch gekennzeichnet, dass** eine Wirkverbindung zwischen Ansaugkammer (3) und Getriebekammer (4) besteht, um ein Abführen von Öl aus der Ansaugkammer (3) in die Getriebekammer (4) zu ermöglichen, und dass eine Wirkverbindung zwischen Kupplungskammer (2) und Getriebekammer (4) besteht, um ein Abführen von Öl aus der Getriebekammer (4) in die Kupplungskammer (2) zu ermöglichen.

2. Kupplungsgetriebe (1) nach Anspruch 1, **dadurch gekennzeichnet, dass** wenigstens ein Öldurchlass (14) zwischen Ansaugkammer (3) und Getriebekammer (4) vorgesehen ist.

3. Kupplungsgetriebe (1) nach Anspruch 2, **dadurch gekennzeichnet, dass** der Öldurchlass zwischen Absaugkammer (3) und Getriebekammer (4) als Überlauf (14) ausgebildet ist, wodurch überschüssiges Öl aus der Ansaugkammer (3) in die Getriebekammer (4) gelangt.

4. Kupplungsgetriebe (1) nach Anspruch 2 oder 3, **dadurch gekennzeichnet, dass** in Einbaulage der vertikale Abstand zwischen dem Öldurchlass (14) und einem unteren Ende (18) der Ansaugkammer (3) wenigstens ein Drittel der Bauhöhe des Kupplungsgetriebes (1) entspricht.

5. Kupplungsgetriebe (1) nach einem der Ansprüche 1 bis 4, **dadurch gekennzeichnet, dass** ein Öldurchlass (12) zwischen Getriebekammer (4) und Kupplungskammer (2) vorgesehen ist.

6. Kupplungsgetriebe (1) nach Anspruch 5, **dadurch gekennzeichnet, dass** der Öldurchlass als Überlauf (12) ausgebildet ist, wodurch überschüssiges Öl aus der Getriebekammer (4) in die Kupplungskammer (2) gelangt.

7. Kupplungsgetriebe (1) nach einem der Ansprüche 1 bis 6, **dadurch gekennzeichnet, dass** der Kupplungsteil (23) von einem Öleingang (6) der Kupplungskammer (2), durch den das Öl aus der Ansaugkammer (3) in die Kupplungskammer (2) tritt, und/oder von dem Öldurchlass (12) zwischen Kupplungskammer (2) und Getriebekammer (4) Öl zu dem Ölausgang (7) der Kupplungskammer (2) fördert.

8. Kupplungsgetriebe (1) nach einem der Ansprüche 1 bis 7, **dadurch gekennzeichnet, dass** die hydraulische Steuerung (19) in der Ansaugkammer (3) angeordnet ist.

9. Kupplungsgetriebe (1) nach einem der Ansprüche 1 bis 8, **dadurch gekennzeichnet, dass** wenigstens eine Verbindung zwischen einem Bauteil oder einer Bauteillagerung der Getriebeteils (20) und der Ölpumpe (15) vorgesehen ist.

10. Kupplungsgetriebe (1) nach einem der Ansprüche 1 bis 9, **dadurch gekennzeichnet, dass** wenigstens eine Verbindung zwischen einem Bauteil oder einer Bauteillagerung des Getriebeteils (20) und dem Ölausgang der Kupplungskammer (2) vorgesehen ist.

11. Verfahren zum Schmieren und Kühlen eines Kupplungsgetriebes (1) mit einem Kupplungsteil (23) und einem Getriebeteil (20), insbesondere zum Schmieren und Kühlen eines Kupplungsgetriebes (1) nach einem der Ansprüche 1 bis 10, mit folgenden Verfahrenschritten:
- Ansaugen von Öl in einer Ansaugkammer (3) und Pumpen des angesaugten Öls in eine Kupplungskammer (2), die den Kupplungsteil (23) aufnimmt;
- Transportieren des in die Kupplungskammer (2) gepumpten Öls zu einem Ölausgang (7) der Kupplungskammer (2);
- Leiten des aus der Kupplungskammer (2) austretenden Öls in die Ansaugkammer (3);
- Leiten eines Teiles des in der Ansaugkammer (3) befindlichen Öls in eine den Getriebeteil (20) aufnehmende Getriebekammer (4); und
- Abführen von Öl aus der Getriebekammer (4) in die Kupplungskammer (2) und Transportieren des Öls in der Kupplungskammer (2) zu dem Ölausgang (7).

12. Verfahren nach Anspruch 11, **dadurch gekennzeichnet, dass** Öl aus der Ansaugkammer (3) in die Getriebekammer (4) nur dann geleitet wird, wenn ein bestimmter Ölstand (13) in der Ansaugkammer (3) überschritten wird.

13. Verfahren nach Anspruch 11, **dadurch gekennzeichnet, dass** Öl aus der Getriebekammer (4) in die Kupplungskammer (2) nur dann geleitet wird, wenn ein bestimmter Ölstand (11) in der Getriebekammer (4) überschritten wird.

## Claims

1. Clutch transmission (1) having a transmission element (20) which is accommodated in a transmission chamber (4), having a clutch element (23) which is accommodated in a clutch chamber (2), and having a hydraulic controller (19) which comprises an oil pump (15) and has the purpose of providing pressures and volume flows in the clutch transmission (1), in which, in order to control and to cool the clutch element (23), the oil pump (15) sucks in oil and pumps it into the clutch chamber (2), and having an intake chamber (3) from which the oil pump (15) sucks in oil, the intake chamber (3) being operatively connected to an oil outlet (7) of the clutch chamber (2) in order to receive the oil which leaves the clutch chamber (2), **characterized in that** there is an operative connection between the intake chamber (3) and the transmission chamber (4) in order to permit oil to be conducted away from the intake chamber (3) into the transmission chamber (4), and wherein there is an operative connection between the clutch chamber (2) and the transmission chamber (4) in order to permit oil to be conducted from the transmission chamber (4) into the clutch chamber (2).

2. Clutch transmission (1) according to Claim 1, **characterized in that** at least one oil conduit (14) is provided between the intake chamber (3) and the transmission chamber (4).

3. Clutch transmission (1) according to Claim 2, **characterized in that** the oil conduit between the intake chamber (3) and the transmission chamber (4) is embodied as an overflow (14), as a result of which excess oil passes from the intake chamber (3) and into the transmission chamber (4).

4. Clutch transmission (1) according to Claim 2 or 3, **characterized in that** in the installed position the vertical distance between the oil conduit (14) and a lower end (18) of the intake chamber (3) corresponds to at least one third of the overall height of the clutch transmission (1).

5. Clutch transmission (1) according to one of Claims 1 to 4, **characterized in that** an oil conduit (12) is provided between the transmission chamber (4) and the clutch chamber (2).

6. Clutch transmission (1) according to Claim 5, **characterized in that** the oil conduit is embodied as an overflow (12), as a result of which excess oil passes from the transmission chamber (4) into the clutch chamber (2).

7. Clutch transmission (1) according to one of Claims 1 to 6, **characterized in that** the clutch element (23) conveys oil from an oil inlet (6) of the clutch chamber (2), through which the oil passes from the intake chamber (3) into the clutch chamber (2), and/or from the oil conduit (12) between the clutch chamber (2) and that the transmission chamber (4) to the oil outlet (7) of the clutch chamber (2).

8. Clutch transmission (1) according to one of Claims 1 to 7, **characterized in that** the hydraulic controller (19) is arranged in the intake chamber (3).

9. Clutch transmission (1) according to one of Claims 1 to 8, **characterized in that** at least one connection is provided between a component or a component mount of the transmission element (20) and the oil pump (15).

10. Clutch transmission (1) according to one of Claims 1 to 9, **characterized in that** at least one connection is provided between a component or a component mount of the transmission element (20) and the oil outlet of the clutch chamber (2).

11. Method for lubricating and cooling a clutch transmission (1) having a clutch element (23) and a transmission element (20), in particular for lubricating and cooling a clutch transmission (1) according to one of Claims 1 to 10, having the following method steps:
- oil is sucked in from an intake chamber (3) and the sucked-in oil is pumped into a clutch chamber (2) which accommodates the clutch element (23);
- the oil which is pumped into the clutch chamber (2) is conveyed to an oil outlet (7) of the clutch chamber (2);
- the oil which leaves the clutch chamber (2) is directed into the intake chamber (3);
- some of the oil located in the intake chamber (3) is directed into a transmission chamber (4) which accommodates the transmission element (20); and
- oil is conducted away from the transmission chamber (4) into the clutch chamber (2), and the oil in the clutch chamber (2) is conveyed to the oil outlet (7).

12. Method according to Claim 11, **characterized in that** oil from the intake chamber (3) is directed into the transmission chamber (4) only when a specific oil level (13) in the intake chamber (3) is exceeded.

13. Method according to Claim 11, **characterized in that** oil from the transmission chamber (4) is directed into the clutch chamber (2) only when a specific oil level (11) is exceeded in the transmission chamber (4).

## Revendications

1. Transmission à embrayage (1) avec une partie de transmission (20) installée dans une chambre de transmission (4), avec une partie d'embrayage (23) installée dans une chambre d'embrayage (2), avec une commande hydraulique (19) comprenant une pompe à huile (15) pour fournir des pressions et des courants volumiques dans la transmission à embrayage (1), dans laquelle la pompe à huile (15) aspire de l'huile et l'envoie dans la chambre d'embrayage (2) pour la commande et/ou pour le refroidissement de la partie d'embrayage (23), et avec une chambre d'aspiration (3), hors de laquelle la pompe à huile (15) aspire de l'huile, dans laquelle la chambre d'aspiration (3) est en liaison active avec une sortie d'huile (7) de la chambre d'embrayage (2) pour recueillir l'huile sortant de la chambre d'embrayage (2), **caractérisée en ce qu'**il existe une liaison active entre la chambre d'aspiration (3) et la chambre de transmission (4), afin de permettre une évacuation d'huile hors de la chambre d'aspiration (3) dans la chambre de transmission (4), et **en ce qu'**il existe une liaison active entre la chambre d'embrayage (2) et la chambre de transmission (4), afin de permettre une évacuation d'huile hors de la chambre de transmission (4) dans la chambre d'embrayage (2).

2. Transmission à embrayage (1) selon la revendication 1, **caractérisée en ce qu'**il est prévu au moins un passage d'huile (14) entre la chambre d'aspiration (3) et la chambre de transmission (4).

3. Transmission à embrayage (1) selon la revendication 2, **caractérisée en ce que** le passage d'huile est réalisé entre la chambre d'aspiration (3) et la chambre de transmission (4) sous forme de trop-plein (14), par lequel l'huile excédentaire s'écoule de la chambre d'aspiration (3) dans la chambre de transmission (4).

4. Transmission à embrayage (1) selon la revendication 2 ou 3, **caractérisée en ce que**, en position de montage, la distance verticale entre le passage d'huile (14) et une extrémité inférieure (18) de la chambre d'aspiration (3) correspond au moins à un tiers de la hauteur de construction de la transmission à embrayage (1) .

5. Transmission à embrayage (1) selon l'une quelconque des revendications 1 à 4, **caractérisé en ce qu'**il est prévu un passage d'huile (12) entre la chambre de transmission (4) et la chambre d'embrayage (2).

6. Transmission à embrayage (1) selon la revendication 5, **caractérisée en ce que** le passage d'huile est réalisé sous la forme d'un trop-plein (12), par lequel l'huile excédentaire s'écoule de la chambre de transmission (4) dans la chambre d'embrayage (2).

7. Transmission à embrayage (1) selon l'une quelconque des revendications 1 à 6, **caractérisée en ce que** la partie d'embrayage (23) refoule de l'huile vers la sortie d'huile (7) de la chambre d'embrayage (2) depuis une entrée d'huile (6) de la chambre d'embrayage (2) par laquelle l'huile passe de la chambre d'aspiration (3) dans la chambre d'embrayage (2), et/ou depuis le passage d'huile (12) entre la chambre d'embrayage (2) et la chambre de transmission (4).

8. Transmission à embrayage (1) selon l'une quelconque des revendications 1 à 7, **caractérisée en ce que** la commande hydraulique (19) est disposée dans la chambre d'aspiration (3).

9. Transmission à embrayage (1) selon l'une quelconque des revendications 1 à 8, **caractérisée en ce qu'**il est prévu au moins une liaison entre un composant ou un support de composant de la partie de transmission (20) et la pompe à huile (15).

10. Transmission à embrayage (1) selon l'une quelconque des revendications 1 à 9, **caractérisée en ce qu'**il est prévu au moins une liaison entre un composant ou un support de composant de la partie de transmission (20) et la sortie d'huile de la chambre d'embrayage (2).

11. Procédé pour lubrifier et refroidir une transmission à embrayage (1) avec une partie d'embrayage (23) et une partie de transmission (20), en particulier pour lubrifier et refroidir une transmission à embrayage (1) selon l'une quelconque des revendications 1 à 10, comportant les étapes suivantes:
- aspiration d'huile dans une chambre d'aspiration (3) et pompage de l'huile aspirée dans une chambre d'embrayage (2), qui contient la partie d'embrayage (23) ;
- transport de l'huile pompée dans la chambre d'embrayage (2) vers une sortie d'huile (7) de la chambre d'embrayage (2);
- conduite de l'huile sortant de la chambre d'embrayage (2) dans la chambre d'aspiration (3);
- conduite d'une partie de l'huile se trouvant dans la chambre d'aspiration (3) dans une chambre de transmission (4) contenant la partie de transmission (20); et
- évacuation d'huile hors de la chambre de transmission (4) dans la chambre d'embrayage (2) et transport de l'huile dans la chambre d'embrayage (2) vers la sortie d'huile (7).

12. Procédé selon la revendication 11, **caractérisé en ce que** l'on ne conduit de l'huile hors de la chambre d'aspiration (3) dans la chambre de transmission (4) que lorsqu'un niveau d'huile déterminé (13) est dépassé dans la chambre d'aspiration (3).

13. Procédé selon la revendication 11, **caractérisé en ce que** l'on ne conduit de l'huile hors de la chambre de transmission (4) dans la chambre d'embrayage (2) que lorsqu'un niveau d'huile déterminé (11) est dépassé dans la chambre de transmission (4).
